# EUROPEAN PATENT APPLICATION

(11) **EP 1 099 801 A1**
(43) Date of publication of application: **16.05.2001**
(21) Application number: 00203739.8
(22) Date of filing: 27.10.2000
(51) Int. Cl.: E02F 9/20, F16C 1/10, B66F 9/20

(54) **Actuating device**

(30) Priority: 09.11.1999 IT BO990606
(71) Applicant: NEW HOLLAND ITALIA S.p.A., I-41100 Modena (IT)
(72) Inventor: Sola, Giancarlo, 41100 Modena (IT)
(74) Representative: Vandenbroucke, Alberic

(57) **Abstract**

An actuating device (7) has a rigid tubular element (8), which extends through a wall (2) of a vehicle cab (1) and is connected in axially-fixed manner to said wall (2). The actuating device (7) further comprises a flexible middle portion (17) housed in said tubular element (8) and two rigid end portions (16), connected respectively to a control handle and a work unit of the vehicle. The connecting ends of the actuating device (7) are operable to move axially as well as through an arc (a) .

## Description

The present invention relates to an actuating device, particularly, although not exclusively for use in earth-moving machinery cabs or cabs of agricultural tractors, to which the following description refers purely by way of example.

Earth-moving machines or tractors are known to feature one or more actuating devices comprising an actuating member, which has a longitudinal axis and extends through a wall of the cab to enable the operator inside the cab to operate a work unit outside the cab.

The actuating member is activated by the operator through a handle, and commonly in turn activates the work unit by intermediary of two cranks or levers, which are hingeably mounted at the respective free ends of the actuating member for rotational movement about respective hinge axes perpendicular to said longitudinal axis. Accordingly, one of the cranks is located inside the cab, while the other one is positioned outside the cab.

When both cranks are of a same length, the actuating member, intermediate the cranks, is moved in a first direction axially with the longitudinal axis and, at the same time, in a second direction substantially orthogonal with the longitudinal axis. In other words, the actuating member is subjected to a combined motion being a pure parallel translation. Conversely, when the cranks are of different lengths, the actuating member is moved in said first axial direction and, at the same time, is rotated to some extent about an instantaneous axis of rotation substantially perpendicular to said first and second directions. Hence, in the latter case, the actuating member is subjected to a rotational translation.

Normally there are two types of actuating members used in known cabs of the above sort.

In a first type, the actuating member comprises a rigid rod extending through an opening formed in the wall of the cab. The opening is larger than the rod diameter to enable the rod to move in either of the above two modes. Since the cab must normally be soundproof and airconditioned, the opening in the wall must be sealed by a flexible bellows fixed to the wall and the rod and extending around the opening.

The above drawback is at least partly solved by the second type of actuating member, which is defined by a flexible member (in this case, a push-pull cable) comprising a cable which slides inside a sheath extending through the wall of the cab. Using a flexible member, however, poses problems as regards fixing the sheath to the wall as this must be done at two points at least to prevent the cable from bending over and above a predetermined limit.

It is an object of the present invention to provide an actuating device designed to eliminate the aforementioned drawbacks.

According to the present invention, there is provided an actuating device comprising an actuating member extending through a wall of a vehicle cab.

The actuating device is characterized in that it further comprises a first tubular element housing said actuating member; said first tubular element having a longitudinal axis and being connected in axially-fixed manner to said wall.

Non-limiting embodiments of the present invention will be described by way of example with reference to the accompanying drawings, in which:
Figure 1 shows a schematic, partly sectioned side view of a preferred embodiment of the device according to the present invention; and
Figure 2 shows a longitudinal section of an alternative embodiment of the device according to the present invention.

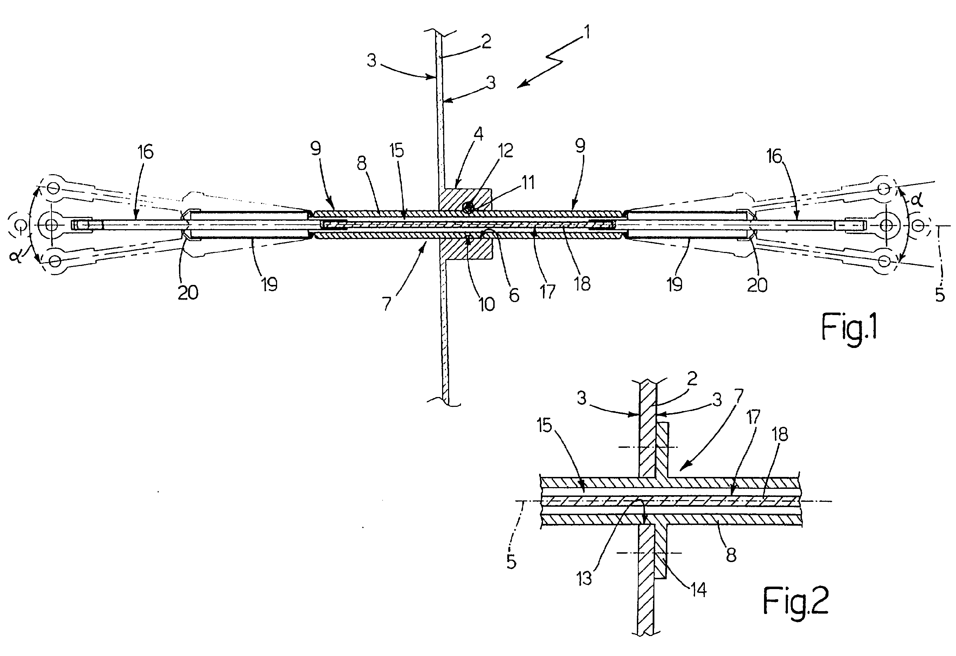

Reference number 1 in Figure 1 indicates as a whole a driver's cab, which may be part of a known earth-moving machine or agricultural tractor (not shown) and is defined by a box shaped body comprising a number of walls 2 (only one shown in the accompanying drawings). Wall 2 is defined laterally by two substantially parallel surfaces 3, and has a hub 4, which projects from one of the surfaces 3. The hub 4 comprises an axis 5 which extends substantially perpendicular to the surfaces 3, and defines a cylindrical seat 6.

Cab 1 comprises an actuating device 7 having a tubular body 8, which engages seat 6 in axially-sliding manner. The tubular body 8 has two free ends 9 projecting outwards from the seat 6, and further comprises an annular groove 10 formed radially in the outer surface of body 8.

The tubular body 8 is locked axially inside seat 6 by a cylindrical pin 11 extending crosswise to axis 5 so as to engage both groove 10 and a cavity 12, which extends through hub 4, perpendicular to axis 5 and faces groove 10.

The Figure 2 embodiment differs from Figure 1 by the body 8 having a flange 14 extending perpendicular to the body 8. The body 8 is slid into an aperture 13 through wall 2 and is fixed thereto by means of known fastening elements (not shown), such as screws or bolts, which fix the flange 14 to the wall 2.

With reference to Figures 1 and 2, the actuating device 7 further comprises an actuating member 15 which is engaged in axially-sliding manner in the tubular body 8. The member 15 is composed of two rigid end portions 16 and a flexible central portion 17 connecting the portions 16. Portions 16 project at least partly outwardly of body 8, one inside and the other one outside of the cab 1, to enable the operator inside cab 1 to control a work unit (not shown) outside cab 1. Portion 17 is substantially housed inside body 8, and is defined by a known cable 18 (in casu a push-pull cable) preferably comprising a braided metal wire and a metal foil coiled around the metal wire.

The actuating member 15 further also comprises two sleeves 19, known in the art, each of which extending about at least part of a respective end portion 16. Each sleeve 19 has a dust seal 20 and is connected in rotary manner to a respective free end of body 8 to oscillate, with respect to body 8, about a respective instantaneous axis of rotation parallel to pin 11, as shown in shadow lines in figure 1.

The actuating member 15 is smaller in diameter than the inside diameter of body 8, and is moved along axis 5 under the control of two cranks (not shown) hinged to the free ends of portions 16. The virtual straight line connection between the free ends of the end portions 16 is able to move in a direction lying in the Figure 1 plane and perpendicular to axis 5, when both cranks (not shown) are of the same length; or about an instantaneous axis of rotation perpendicular to the Figure 1 plane, when the two cranks (not shown) are of different lengths. It of course will be understood that also pure rectilinear movements of the actuating device 7 are possible when no cranks are provided.

It should be noted that the flexible portion 17 enables each portion 16 to oscillate by a respective angle α about a respective instantaneous axis of oscillation. More specifically, when the member 15 is controlled by the two cranks, the instantaneous axis of oscillation referred to above is substantially perpendicular to the Figure 1 plane, and angle α is approximately 8°.

In a further alternative embodiment (not shown), internal portion 17 may be replaced by a rigid rod smaller in diameter than the inside diameter of body 8 on condition that this rod is hingeably connected to each end portion 16. In a still further alternative arrangement (not shown), the actuating member 15 as a whole may be replaced by a flexible cable of a diameter substantially equal to the inside diameter of body 8.

As will be clear from the foregoing description, actuating device 7 has the advantage of comprising a body 8 which is fixed to wall 2 of cab 1 in a relatively easy and economic manner without requiring additional means for sealing the passage of the actuating device 7 through the cab wall 2.

## Claims

1. An actuating device comprising an actuating member (15) extending through a wall (2) of a vehicle cab (1); and
characterized in that the actuating device further comprises a first tubular element (8) housing said actuating member (15); said first tubular element (8) having a longitudinal axis (5) and being connected in axially-fixed manner to said wall (2).

2. A device according to claim 1, characterized in that said wall (2) comprises a second tubular element (4) projecting from said wall (2) and defining a seat (6); said first tubular element (8) being connected in axially-fixed manner to said seat (6).

3. A device according to claim 2, characterized in that the device further comprises a connecting member (11) for axially locking said first tubular element (8) inside said seat (6).

4. A device according to claim 3, characterized in that :
- said second tubular element (4) comprises a cavity (12) extending therethrough in a direction orthogonal to said axis (5); and
- said first tubular element (8) comprises an outer annular groove (10) facing said cavity (12); said connecting member (11) engaging said cavity (12) and said annular groove (10) for axially locking said first tubular element (8) inside said second tubular element (4).

5. A device according to claims 3 or 4, characterized in that said connecting member (11) is a cylindrical pin (11) .

6. A device according to claim 1, characterized in that said first tubular element (8) comprises flange means (14) for attaching said first tubular element (8) in axially-fixed manner to said wall (2).

7. A device according to any of the preceding claims, characterized in that said actuating member (15) comprises two rigid end portions (16) and a flexible central portion (17) connecting said end portions (16); said central portion (17) being housed substantially inside said first tubular element (8).

8. A device according to claim 7, characterized in that :
- said first tubular element (8) has a given inside diameter;
- said flexible central portion (17) has a first diameter smaller than said inside diameter; and
- each of said end portions (16) has the freedom of oscillating by a given angle (α) about a respective instantaneous axis of oscillation.

9. A device according to claim 8, characterized in that said instantaneous axis of oscillation is perpendicular to said axis (5), and said angle (α) is approximately 8°.

10. A device according to any of the claims 1 to 6, characterized in that :
- said first tubular element (8) has a given inside diameter; and
- said actuating member (15) is composed of a rigid rod having a second diameter smaller than said inside diameter.

11. A device according to any of the claims 1 to 6, characterized in that :
- said first tubular element (8) has a given inside diameter; and
- said actuating member (15) comprising a flexible cable having a third diameter substantially equal to said inside diameter.

12. A vehicle cab comprising a number of walls (2), and characterized in that the cab (1) comprises at least one actuating device (7) as claimed in any one of the preceding claims; said at least one actuating device (7) being fitted to one of said walls (2).
